# EUROPEAN PATENT APPLICATION

(11) **EP 4 700 931 A1**
(43) Date of publication of application: **25.02.2026**
(21) Application number: 25194619.0
(22) Date of filing: 07.08.2025
(51) Int. Cl.: H01M 50/152, H01M 50/164, H01M 50/167, H01M 50/474, H01M 50/483, H01M 50/486

(54) **SECONDARY BATTERY, BATTERY PACK AND ELECTRONIC APPARATUS**

(30) Priority: 21.08.2024 CN 202422040049 U
(71) Applicant: AESC Japan Ltd., Yokohama-Shi, Kanagawa 220-0012 (JP)
(72) Inventor: QIAN, Jia, Jiangyin City, Wuxi City, 214443 (CN)
(74) Representative: Becker, Eberhard

(57) **Abstract**

A secondary battery (100), a battery pack (1002), and an electronic apparatus are provided. The secondary battery includes an electrode assembly (120), a battery housing (200) configured to define an accommodating cavity used to accommodate the electrode assembly and having an opening (205), and a cap plate assembly (220) covering the opening of the battery housing to encapsulate the electrode assembly. The cap plate assembly includes a cap plate body (90) and an insulating layer (93) located on a surface (90s) of the cap plate body facing the electrode assembly. Through the above technical solution, the corrosion resistance of the cap plate assembly of the secondary battery is at least improved.

## Description

### Technical Field

The disclosure relates to the technical field of energy storage equipment, and in particular, relates to a secondary battery, a battery pack, and an electronic apparatus.

### Description of Related Art

In the field of new energy power batteries, the application of secondary batteries is increasing. For instance, secondary batteries (e.g., lithium-ion batteries) can be applied to electronic apparatuses such as vehicles, energy storage, mobile phones, tablets, wearable devices, power banks, electronic cigarettes, digital products, power tools, power devices, energy storage devices, etc. A secondary battery in a cylindrical battery including an outer battery housing and an electrode assembly. The electrode assembly includes a positive terminal sheet, a first separator, a negative terminal sheet, and a second separator, which are stacked sequentially and wound into an electrode assembly then encapsulated in the battery housing. However, regarding the secondary batteries of the related art, further improvement in certain aspects is still needed.

### SUMMARY

the disclosure provides a secondary battery, a battery pack, and an electronic apparatus to at least improve the corrosion resistance of a cap plate assembly of the secondary battery.

An embodiment of the disclosure provides a secondary battery including an electrode assembly, a battery housing configured to define an accommodating cavity used to accommodate the electrode assembly and having an opening, and a cap plate assembly covering the opening of the battery housing to encapsulate the electrode assembly. The cap plate assembly includes a cap plate body and an insulating layer located on a surface of the cap plate body facing the electrode assembly.

By arranging the insulating layer on the surface of the cap plate body of the cap plate assembly facing the electrode assembly, the electrolyte is isolated from the cap plate body, so that the corrosion of the cap plate body by the electrolyte is slowed down or avoided, and the corrosion resistance of the cap plate assembly is thus improved.

The beneficial technical effects provided by the disclosure include the following.

By arranging the insulating layer on the surface of the cap plate body of the cap plate assembly facing the electrode assembly, the electrolyte is isolated from the cap plate body, so that the corrosion of the cap plate body by the electrolyte is slowed down or avoided, and the corrosion resistance of the cap plate assembly is thus improved. In addition, the notch of the cap plate body is more susceptible to corrosion by the electrolyte. In the disclosure, since the insulating layer covers the notch, the notch is effectively protected from being corroded by the electrolyte. In addition, by arranging the metal layer between the cap plate body and the insulating layer, the cap plate body is further protected from rusting/corrosion. In addition, by arranging the edge of the insulating layer in the sealing region formed by the press-fitting portion, it is ensured that the electrolyte does not enter between the insulating layer and the cap plate body via the edge of the insulating layer, so that the electrolyte is isolated, and the cap plate body is prevented from being corroded by the electrolyte.

### BRIEF DESCRIPTION OF THE DRAWINGS

To make the technical solutions provided in the embodiments of the disclosure or the related art more clearly illustrated, several accompanying drawings required by the embodiments or the related art for description are briefly introduced as follows. Obviously, the drawings in the following description are some embodiments of the disclosure, and for a person having ordinary skill in the art, other drawings can be obtained based on these drawings without an inventive effort.
FIG. 1 illustrates a schematic view when an electronic apparatus is a vehicle according to an embodiment of this disclosure.
FIG. 2 illustrates a three-dimensional view of a secondary battery according to an embodiment of the disclosure.
FIG. 3 illustrates a cross-sectional view of the secondary battery according to an embodiment of the disclosure.
FIG. 4 is a schematic cross-sectional view illustrating a cap plate assembly of the secondary battery in FIG. 3 according to an embodiment of the disclosure.
FIG. 5 is a schematic cross-sectional view illustrating the cap plate assembly of the secondary battery according to an embodiment of the disclosure.
FIG. 6 is a schematic local enlargement cross-sectional view illustrating the cap plate assembly of the secondary battery in FIG. 3 according to an embodiment of the disclosure.

### DESCRIPTION OF THE EMBODIMENTS

For a better understanding of the spirit of the embodiments of this disclosure, further explanations are provided below together with some preferred embodiments of the disclosure.

The embodiments of this disclosure are to be described in detail in the following paragraphs. Throughout the specification of the disclosure, similar or like components and components with similar or like functions are represented by similar reference numerals. The embodiments related to the drawings described herein are illustrative, graphical, and provided for a basic understanding of the disclosure. The embodiments of the disclosure should not be interpreted as limitations of the disclosure.

As used herein, the terms "substantially", "basically", "essentially", and "approximately" are used to describe and explain small variations. When used together with an event or circumstance, these terms may refer to examples where the event or circumstance occurs precisely as well as examples where the event or circumstance occurs very approximately.

In the specification, unless specifically designated or limited, relative terms such as: "central", "longitudinal", "lateral", "front", "rear", "right", "left", "internal", "external", "lower", "higher", "horizontal", "vertical", "above", "below", "upper", "lower", "top", "bottom", and their derivatives (such as "horizontally", "downwardly", "upwardly", etc.) shall be interpreted as referring to the orientation described in the discussion or shown in the drawings. These relative terms are used only for descriptive convenience and do not require that the disclosure be constructed or operated in a particular direction.

For ease of description, "first", "second", "third", etc. may be used herein to distinguish different components in one figure or a series of figures. "First", "second", "third" etc. are not intended to describe the corresponding components.

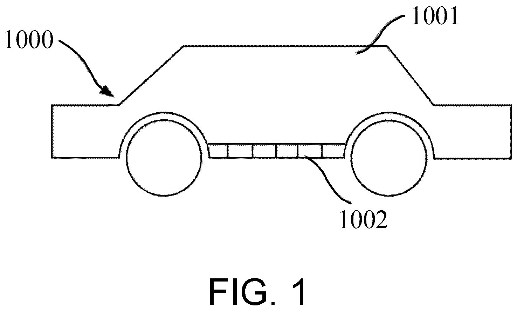

Referring to FIG. 1, for ease of description, the following embodiments are described by taking the electronic apparatus as the vehicle 1000. However, it is not difficult to understand that the electronic apparatus provided by the disclosure is not limited to a vehicle, and the electrical apparatus may be a vehicle, a mobile phone, a portable device, a notebook computer, a ship, a spacecraft, an electric toy, an electric tool, etc.

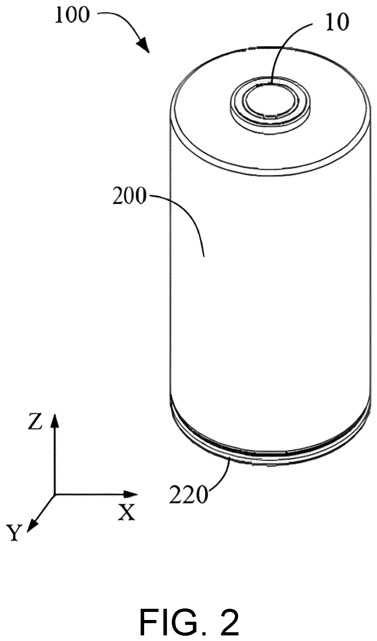

A battery pack 1002 may arranged inside the vehicle 1000, and the battery pack 1002 may be arranged at a bottom portion (as shown in FIG. 1), a front portion, a tail portion, or any other appropriate position of a vehicle body 1001. The battery pack 1002 may be used for power supply to the vehicle 1000, for example, the battery pack 1002 may act as an operating power source or a driving power source of the vehicle 1000. The battery pack 1002 may include a plurality of secondary batteries (e.g., a secondary battery 100 in FIG. 2) and an outer battery housing accommodating the plurality of cylindrical batteries.

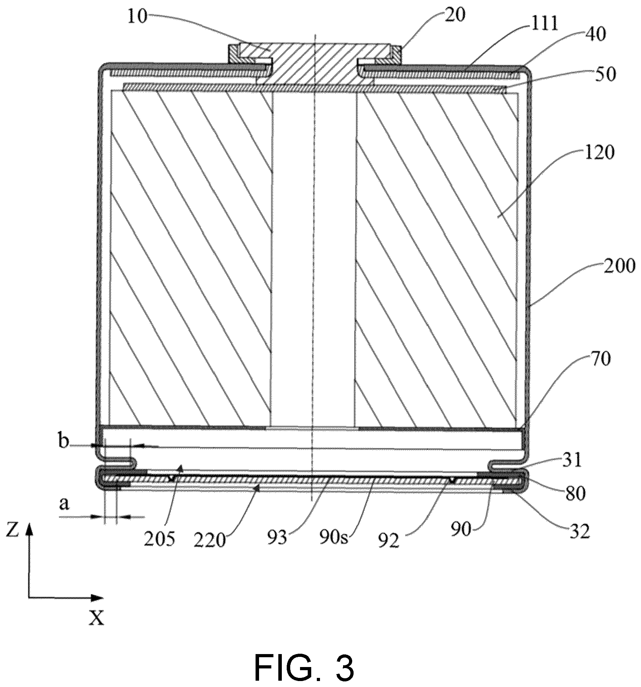

FIG. 2 illustrates a three-dimensional view of the secondary battery 100 according to an embodiment of the disclosure. FIG. 3 illustrates a cross-sectional view of the secondary battery 100 according to an embodiment of the disclosure. In this embodiment, the secondary battery 100 is shown as a cylindrical battery as an example. Referring to FIG. 2 and FIG. 3 together, the secondary battery 100 may include an electrode assembly 120, a battery housing 200, and a cap plate assembly 220. The battery housing 200 and the cap plate assembly 220 are components that accommodate the electrode assembly 120 and the electrolyte together. A material of the battery housing 200 may be any one of various available materials, such as copper, iron, aluminum, steel, aluminum alloy, etc. The battery housing 200 may be cylindrical and define an accommodating cavity, with the electrode assembly 120 arranged inside the accommodating cavity. A diameter size of the battery housing 200 may be determined according to a specific diameter size of the electrode assembly 120, such as 18mm, 21mm, 46mm, etc. In some embodiments, the secondary battery 100 may be a 4680 cylindrical battery (diameter 46mm and height 80mm), the secondary battery 100 may be a 4695 cylindrical battery (diameter 46mm and height 95mm), or the secondary battery 100 may be a 46120 cylindrical battery (diameter 46mm and height 120mm).

The electrode assembly 120 may include a first terminal sheet, a first separator, a second terminal sheet, and a second separator that are stacked and wound in sequence. The electrolyte may be located among the first terminal sheet, the first separator, the second terminal sheet, and the separator. In some embodiments, the first terminal sheet is one of a positive terminal sheet and a negative terminal sheet, and the second terminal sheet is the other of the positive terminal sheet and the negative terminal sheet.

The positive terminal sheet may include a positive current collector and a positive active material layer coated on both surfaces of the positive current collector. A portion of the positive current collector not coated with the positive active material layer constitutes a positive tab. The negative terminal sheet may include a negative current collector and a negative active material layer coated on both surfaces of the negative current collector. A portion of the negative current collector not coated with the negative active material layer constitutes a negative tab. Taking a lithium-ion battery as an example, a material of the positive current collector may be aluminum, the positive active material layer may include a positive active material, and the positive active material may be lithium cobalt oxide, lithium iron phosphate, ternary lithium, or lithium manganese oxide, etc. A material of the negative current collector may be copper, the negative active material layer may include a negative active material, and the negative active material may be carbon or silicon, etc. In some embodiments, a material of the first separator and the second separator may be, for example, polypropylene (PP) or polyethylene (PE), etc.

By coating the positive active material layer on the positive terminal sheet, the positive active material layer contains lithium ions. When the positive active material layer contacts the electrolyte and the battery is charging, the lithium ions in the positive active material layer move through the electrolyte to the negative active material layer and are embedded into the negative active material layer. This process is the activation process of lithium ions, and is also the charging process of the battery.

The battery housing 200 may have an opening 205 at one end in a height direction (direction Z) and has an end wall 111 at the other end. The two ends of the electrode assembly 120 in the direction Z may be provided with a positive tab facing the end wall 111 and a negative tab facing the opening 205. In some embodiments, a terminal post 10 may be connected to the positive tab of the electrode assembly 120 through a positive current collector plate 50, making the terminal post 10 positively charged, so that the terminal post 10 can function as a positive terminal end in the secondary battery 100. The negative tab of the electrode assembly 120 may be connected to the battery housing 200 through a negative current collector plate 70, thereby making the battery housing 200 negatively charged. The terminal post 10 may be electrically insulated from the negatively charged battery housing 200. The electrical insulation between the terminal post 10 and the battery housing 200 may be achieved in various ways. For instance, the electrical insulation between the terminal post 10 and the battery housing 200 may be achieved by sandwiching upper plastic 20 and lower plastic 40 between the terminal post 10 and the battery housing 200.

The cap plate assembly 220 covers the opening 205 of the battery housing 200 and seals the accommodating cavity of the battery housing 200, so as to encapsulate the electrode assembly 120 and the electrolyte. Since the battery housing 200 and the cap plate assembly 220 are used to accommodate the electrolyte together, the electrolyte, which is an acidic solution, has strong corrosion resistance. Therefore, the cap plate assembly 220 is easily subject to slow corrosion by the electrolyte during the use of the battery.

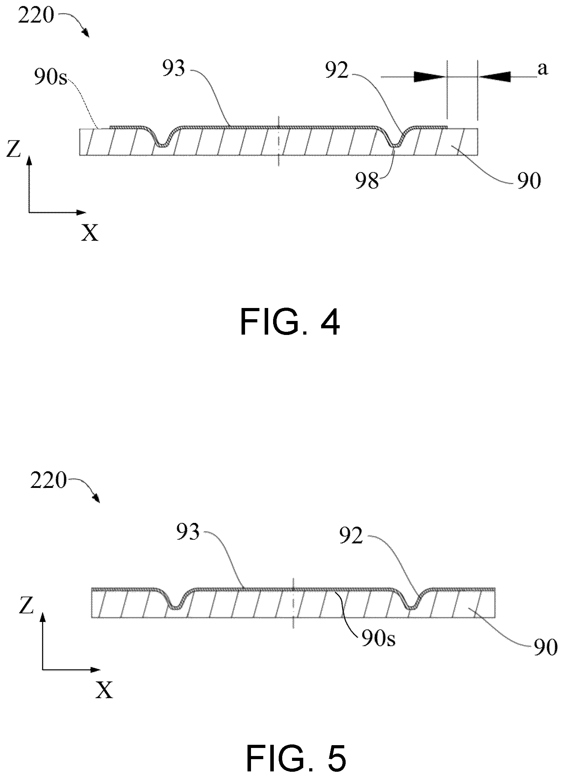

FIG. 4 is a schematic cross-sectional view illustrating the cap plate assembly of the secondary battery 100 in FIG. 3 according to an embodiment of the disclosure. Referring to FIG. 4 together with FIG. 3, the cap plate assembly 220 may include a cap plate body 90 and an insulating layer 93. The cap plate body 90 has a surface 90s facing the electrode assembly 120. The insulating layer 93 may be located on the surface 90s of the cap plate body 90 facing the electrode assembly 120 and the electrolyte. The insulating layer 93 may be used to isolate the electrolyte from the cap plate body 90.

By arranging the insulating layer 93 on the surface 90s of the cap plate body 90 facing the electrode assembly 120, the electrolyte may be isolated from the cap plate body 90, so that the corrosion of the cap plate body 90 by the electrolyte may be slowed down or avoided, and the corrosion resistance of the cap plate assembly 220 may thus be improved.

Referring to FIG. 4, the surface 90s of the cap plate body 90 facing the electrode assembly side may have a notch 92 recessed inward relative to the surface 90s of the cap plate body 90. By forming the notch 92, a weakened portion 98 may be formed. A thickness of the weakened portion 98 is less than a thickness of other regions of the cap plate body 90. The recessed notch 92 may be formed by removing a portion of the cap plate body 90. In some embodiments, in a top view of the cap plate body 90, the weakened portion 98 may be circular. Compared to other regions of the cap plate body 90, the weakened portion 98 has weaker strength and is more prone to fracture. When thermal runaway occurs in the battery, the high-temperature and high-pressure discharge materials in an inner portion of the battery may break through the weakened portion 98 on the cap plate assembly 220 and be discharged to the outside, so that the discharge materials are well discharged.

According to an embodiment of the disclosure, the insulating layer 93 covers the notch 92. Typically, the notch 92 of the cap plate body 90 is more susceptible to corrosion by the electrolyte. In the disclosure, since the insulating layer 93 covers the notch 92, the notch 92 is effectively protected from being corroded by the electrolyte.

In some embodiments, a metal layer (not shown) may be arranged between the cap plate body 90 and the insulating layer 93. The metal layer may be arranged on the entire surface of the cap plate body 90. By arranging the metal layer, the cap plate body 90 may be further protected from rusting/corrosion. A material of the metal layer may have higher corrosion resistance to the electrolyte than a material of the cap plate body 90. In an embodiment, the cap plate body 90 may be made of metal (e.g., metal containing Fe (iron) element), for example, the material of the cap plate body 90 may be steel (e.g., low carbon steel). The metal layer may be, for example, a Ni (nickel) layer, specifically, it may be a nickel plating layer electroplated on the surface of the cap plate body 90. Because Ni element has good stability and high corrosion resistance in the electrolyte, it may further protect the cap plate body 90 most of the time.

In addition, for the cap plate body 90 pre-plated with the metal layer (e.g., Ni layer), since forming the notch 92 on the surface 90s may damage the metal layer at the notch 92, making the cap plate body 90 possibly not completely covered by the metal layer, a proportion of exposed cap plate body 90 (e.g., Fe element) increases, and the exposed cap plate body 90 may be preferentially corroded by the electrolyte, causing the cap plate body 90 to be more susceptible to rusting/corrosion. According to an embodiment of the disclosure, since the insulating layer 93 covers the notch 92, the exposed cap plate body 90 (e.g., Fe element) after forming the notch 92 may be isolated from the electrolyte, so that rusting/corrosion of the exposed cap plate body 90 may be effectively avoided.

Referring to FIG. 4 again, in some embodiments, the insulating layer 93 may cover a portion of the surface 90s of the cap plate body 90. The insulating layer 93 may cover a middle region of the cap plate body 90, while exposing an edge region of the cap plate body 90. In the embodiments where the cap plate assembly 220 is for a cylindrical battery, the cap plate body 90 may have a circular top view shape, and the insulating layer 93 may also have a circular top view shape. In the diameter direction (direction X) of the cap plate body 90, a non-zero distance a may be provided between an edge of the insulating layer 93 and an edge of the cap plate body 90. This distance a may correspond to a width of the edge region of the cap plate body 90 not covered by the insulating layer 93. In some embodiments, the distance a may be greater than or equal to 0.5mm and less than or equal to 5mm (5mm≥a≥0.5mm). By configuring the distance a to be 5mm≥a≥0.5mm, the region of the cap plate body 90 covered by the insulating layer 93 may be appropriately large enough to ensure that the surface 90s in the region of the cap plate body 90 that may contact the electrolyte is entirely covered by the insulating layer 93. As such, the electrolyte is well isolated, and corrosion of the cap plate body 90 by the electrolyte is reduced or avoided.

A material of the insulating layer 93 may be any material applicable for isolating the electrolyte. In some embodiments, the insulating layer 93 may be an ultraviolet light cured (UV) adhesive layer. The UV adhesive layer may be formed by spraying UV adhesive on the cap plate body 90 and then curing the UV adhesive by ultraviolet light irradiation. The main component of the UV adhesive layer may be acrylate. UV adhesive has the advantages of fast curing and easy formation, and the cured UV adhesive layer may achieve good isolation effect.

In some embodiments, a thickness of the insulating layer 93 may range from 20µm to 200µm. If the thickness of the insulating layer 93 is less than 20µm, the expected isolation effect cannot be achieved. If the thickness is greater than 200µm, excessive internal space of the battery may be occupied. An insulating layer 93 with a thickness ranges from 20µm to 200µm may provide a favorable electrolyte isolation effect without occupying excessive internal space of the battery. In the embodiments where the insulating layer 93 is a UV adhesive layer, the thickness range of the insulating layer 93 may be 30µm to 70µm. Since the UV adhesive layer may provide good electrolyte isolation effect, the thickness of the insulating layer 93 may be reduced to within the range of 30µm to 70µm, so that excessive internal space of the battery may not be occupied.

FIG. 5 is a schematic cross-sectional view illustrating the cap plate assembly of the secondary battery 100 according to another embodiment of the disclosure. Referring to FIG. 5, the difference from the embodiment shown in FIG. 4 is that the insulating layer 93 may cover the entire region of the surface 90s. By configuring the insulating layer 93 to cover the entire surface 90s of the cap plate body 90 facing the electrode assembly 120, it may be ensured that the insulating layer 93 completely isolates the electrolyte from the cap plate body 90.

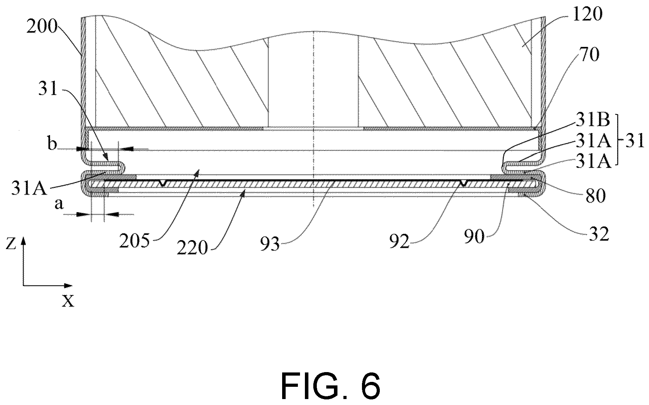

FIG. 6 is a schematic local enlargement cross-sectional view illustrating the cap plate assembly 220 of the secondary battery 100 in FIG. 3 according to an embodiment of the disclosure. Referring to FIG. 6, a press-fitting portion 31 protruding inward may be arranged on a side wall of the battery housing 200 adjacent to the opening 205. The press-fitting portion 31 may be a rolled groove structure formed by bending a portion of the side wall of the battery housing 200 inward.

In addition, an end portion of the battery housing 200 at the opening 205 side may be constructed as a rolled edge portion 32, and the rolled edge portion 32 extends inward in a radial direction (direction X) of the battery housing 200. The press-fitting portion 31 and the rolled edge portion 32 are spaced apart in the direction Z, and the press-fitting portion 31 and the rolled edge portion 32 may hold the cap plate assembly 220 together. The cap plate assembly 220 and the battery housing 200 may be further sealed by a seal ring 80. In the direction Z, the electrode assembly 120 is arranged between the end wall 111 (see FIG. 3) and the press-fitting portion 31, and the press-fitting portion 31 may limit the movement of the electrode assembly 120 in the direction Z between the end wall 111 and the press-fitting portion 31 of the battery housing 200. The rolled edge portion 32 and the press-fitting portion 31 may provide support and positioning for the cap plate assembly 220 together, and the installation stability of the cap plate assembly 220 is thus ensured. The press-fitting portion 31 may also separate the cap plate assembly 220 and the electrode assembly 120. In this way, it is further ensured that the cap plate assembly 220 is not connected to the electrode assembly 120, the cap plate assembly 220 is not electrified, and the overall structure is relatively simple and easy to be implemented.

Specifically, the press-fitting portion 31 may include two straight portions 31A parallel to the surface 90s of the cap plate body 90 (i.e., extending in the direction X) and a bent portion 31B connected to the two straight portions 31A. A region where the cap plate body 90 and the straight portions 31A have overlapping projections in the direction Z may be called a sealing region, and a size of the sealing region in the direction X is called a sealing width b. In some embodiments, the edge of the insulating layer 93 may be located between the cap plate body 90 and the straight portions 31A in the direction Z, that is, the edge of the insulating layer 93 extends into the sealing region. By arranging the edge of the insulating layer 93 in the sealing region, it may be ensured that the electrolyte may not enter between the insulating layer 93 and the cap plate body 90 via the edge of the insulating layer 93, so that the electrolyte is isolated, and the cap plate body 90 is prevented from being corroded by the electrolyte.

In addition, the edge of the cap plate assembly 220 and a region between the press-fitting portion 31 and the rolled edge portion 32 of the battery housing 200 may be covered by the seal ring 80 most of the time. By arranging the edge of the insulating layer 93 in the sealing region, the insulating layer 93 and the seal ring 80 may provide a sealing effect between the cap plate body 90 made of a metal material and the battery housing 200 together, so that the sealing effect may be further improved.

In some embodiments, the sealing width b may be greater than 1mm. In some embodiments, the distance a between the edge of the insulating layer 93 and the edge of the cap plate body 90 may be greater than or equal to 0.5mm and less than or equal to 5mm (5mm≥a≥0.5mm). A difference between the sealing width b and the distance a may correspond to the width of the portion of the insulating layer 93 located in the sealing region, that is, the width of the portion of the insulating layer 93 entering the sealing region. In some embodiments, the difference between the sealing width b and the distance a may range from 0.5mm to 3mm (i.e., 0.5mm≤b-a≤3mm). In other words, the width of the portion of the insulating layer 93 entering the sealing area ranges from 0.5mm to 3mm. Such a width setting may ensure that the insulating layer 93 extends into the sealing region for an appropriate distance, so that favorable sealing and anti-corrosion effects are provided, and material waste caused by arrangement of excessive insulating layers in the sealing region is avoided.

In an exemplary embodiment, a method of forming a secondary battery may include the following steps. First, a low carbon steel strip is stamped to form the cap plate body 90, and the low carbon steel strip has undergone nickel plating treatment to form a metal layer (nickel plating layer) before the cap plate body 90 is stamped. Next, after the cap plate body 90 is stamped, its surface is degreased and cleaned. UV adhesive is then sprayed on a defined region of the surface 90s on the side of the cap plate body 90 facing the inner portion of the battery, and ultraviolet light is used to rapidly cure it to form a UV adhesive layer (insulating layer 93). The defined region may be a circular region, and the distance a between the edge of the defined UV adhesive layer region and the edge in the diameter direction of the cap plate body 90 is 1.5mm. The thickness of the cured UV adhesive layer may be approximately 60µm. Finally, the method of forming the secondary battery also includes the following. A rolled groove sealing structure (press-fitting portion 31) is formed. After the battery is assembled, the sealing width of the sealing region is b=3mm, and the width of the UV adhesive layer entering the sealing region is b-a=1.5mm.

In another exemplary embodiment, the method of forming a secondary battery may include the following steps. First, a low carbon steel strip is stamped to form the cap plate body 90, and the low carbon steel strip has not undergone nickel plating treatment before the cap plate body 90 is stamped. Next, after the cap plate body 90 is stamped, its surface is degreased and cleaned, then barrel nickel plating treatment is performed to form a metal layer (nickel plating layer), so that the cap plate body 90 itself has improved rust resistance capability. A UV adhesive layer is then sprayed on a defined region of the surface 90s on the side of the cap plate body 90 facing the inner portion of the battery, and ultraviolet light is used to rapidly cure it to form a UV adhesive layer (insulating layer 93). The defined region may be a circular region, and the distance a between the edge of the defined UV adhesive layer region and the edge in the diameter direction of the cap plate body 90 is 1 mm. The thickness of the cured UV adhesive layer may be approximately 35µm. Finally, the method of forming the secondary battery also includes the following. A rolled groove sealing structure (press-fitting portion 31) is formed. After the battery is assembled, the sealing width of the sealing region is b=2.4mm, and the width of the UV adhesive layer entering the sealing region is b-a=1.4mm.

After the processing of the above two exemplary embodiments, the processing result is that the surface 90s on the side of the cap plate body 90 facing the inner portion of the battery is covered with a UV adhesive layer, and the edge of the UV adhesive layer enters the sealing region. The product maintains good sealing property, and further, the surface portion in contact with the electrolyte is covered by the UV adhesive layer capable of effectively isolating the electrolyte and protecting the cap plate body 90 from being corroded by the electrolyte.

Moreover, the above beneficial effects of the disclosure have been proven through testing. In one test, the secondary battery provided by the disclosure (in which the cap plate assembly includes the above cap plate body, the metal layer, and the insulating layer) was subjected to high temperature storage, and the result showed no abnormal pressure drop. Further, during the storage process, there was no corrosion or blackening phenomenon on the surface of the cap plate assembly facing the inner portion of the secondary battery. In another test, the surface of the cap plate assembly covered with the UV adhesive layer was placed in neutral salt spray for 2 hours, and there was absolutely no rusting phenomenon. In yet another test, after the surface of the cap plate assembly covered with the UV adhesive layer was placed in a high temperature and high humidity (HTHH) environment of 85°C and 90% relative humidity (RH) for 6 days, there was no rusting phenomenon. It can be seen that in the disclosure, through arrangement of an insulating layer such as the UV adhesive layer, the cap plate assembly may be effectively avoided from being corroded by the electrolyte.

## Claims

1. A secondary battery (100), comprising:
an electrode assembly (120);
a battery housing (200) configured to define an accommodating cavity used to accommodate the electrode assembly (120) and having an opening (205); and
a cap plate assembly (220) covering the opening (205) of the battery housing (200) to encapsulate the electrode assembly (120) and comprising:
a cap plate body (90); and
an insulating layer (93) located on a surface (90s) of the cap plate body (90) facing the electrode assembly (120).

2. The secondary battery (100) according to claim 1, wherein
the surface (90s) of the cap plate body (90) facing the electrode assembly (120) has a notch (92), wherein the insulating layer (93) covers the notch (92).

3. The secondary battery (100) according to claim 1, wherein
a metal layer is arranged between the cap plate body (90) and the insulating layer (93).

4. The secondary battery (100) according to claim 1, wherein
a distance between an edge of the insulating layer (93) and an edge of the cap plate body (90) is greater than or equal to 0.5mm and less than or equal to 5mm.

5. The secondary battery (100) according to claim 1, wherein
the insulating layer (93) covers the entire surface (90s) of the cap plate body (90) facing the electrode assembly (120).

6. The secondary battery (100) according to claim 1, wherein
the insulating layer (93) is an ultraviolet light cured adhesive layer.

7. The secondary battery (100) according to claim 1, wherein
a press-fitting portion (31) protruding inward is arranged on a side wall of the battery housing (200) adjacent to the opening (205), and the press-fitting portion (31) comprises a straight portion (31A) arranged parallel to the surface (90s) of the cap plate body (90),
wherein an edge of the insulating layer (93) is located between the straight portion (31A) and the cap plate body (90),
the secondary battery (100) is a cylindrical battery, and
sealing between the cap plate assembly (220) and the battery housing (200) is performed through a seal ring (80).

8. The secondary battery (100) according to claim 7, wherein
the cap plate body (90) is circular, and a region where the straight portion (31A) and the cap plate body (90) have overlapping projections in a direction perpendicular to the surface (90s) is a sealing region, wherein a portion of the insulating layer (93) located in the sealing region has a width in a diameter direction of the cap plate body (90), and the width ranges from 0.5mm to 3mm.

9. A battery pack (1002), comprising the secondary battery (100) according to any one of claims 1 to 8.

10. An electronic apparatus, comprising the battery pack (1002) according to claim 9.
